(19) Europäisches Patentamt
European Patent Office
Office européen des brevets

(11) EP 2 848 920 A1

(12) EUROPEAN PATENT APPLICATION
published in accordance with Art. 153(4) EPC

(43) Date of publication:
18.03.2015 Bulletin 2015/12

(51) Int Cl.:
G01N 21/65 (2006.01)

(21) Application number: 13787635.5

(22) Date of filing: 02.05.2013

(86) International application number:
PCT/JP2013/002922

(87) International publication number:
WO 2013/168401 (14.11.2013 Gazette 2013/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 10.05.2012 JP 2012108273

(71) Applicant: Seiko Epson Corporation
Shinjuku-ku
Tokyo 163-0811 (JP)

(72) Inventor: MANO, Tetsuo
Suwa-shi, Nagano 392-8502 (JP)

(74) Representative: Hoffmann Eitle
Patent- und Rechtsanwälte PartmbB
Arabellastraße 30
81925 München (DE)

(54) **SENSOR CHIP, SENSOR CARTRIDGE AND DETECTION DEVICE**

(57) A sensor chip capable of reliably combining propagating surface plasmon resonance with localized surface plasmon resonance of metal nanostructures is provided.

A sensor chip 11 includes a metal grating 16. The metal grating 16 includes multiple long metal pieces 17 extending in a first direction FD. The long metal pieces 17 are arranged at a pitch smaller than the wavelength of an excitation light. A dielectric layer 18 covers the surface of the metal grating 16. A linear concavo-convex pattern 19 which extends in a second direction SD intersecting the first direction FD is formed on the dielectric layer 18. Metal nanostructures 23 are placed on the surface of the dielectric layer 18.

FIG. 1

Printed by Jouve, 75001 PARIS (FR)

**Description**

Technical Field

The present invention relates to a sensor chip including metal nanostructures such as metal nanoparticles or metal nanoprotrusions, and a sensor cartridge and a detection apparatus, each utilizing such a sensor chip, etc.

Background Art

There has been known a sensor chip utilizing localized surface plasmon resonance (LSPR). Such a sensor chip includes, for example, metal nanostructures, in other words, metal nanoparticles dispersed on the surface of a dielectric body. The metal nanoparticles are formed sufficiently smaller than, for example, the wavelength of an excitation light. When the metal nanoparticles are irradiated with an excitation light, all electric dipoles are aligned, and thus an enhanced electric field is induced. As a result, a near-field light is generated on the surfaces of the metal nanoparticles. A so-called hotspot is formed.

Citation List

Patent Literature

**[0003]**

　　　PTL 1: JP-A-2011-128135

　　　PTL 2: JP-A-2011-141265

Summary of Invention

Technical Problem

As suggested by PTL 1 and PTL 2, there has been known a sensor chip utilizing propagating surface plasmon resonance (PSPR). In the sensor chip, a metal grating is formed on the surface of a device chip. An excitation light is converted into a diffracted light by the action of the metal grating. The diffracted light causes propagating surface plasmon resonance on the surface of the metal grating. It is considered that if the propagating surface plasmon resonance can be combined with the localized surface plasmon resonance, the near-field light is enhanced on the surfaces of the metal nanostructures.
According to at least one aspect of the invention, a sensor chip capable of reliably combining propagating surface plasmon resonance with localized surface plasmon resonance of metal nanostructures can be provided.

Solution to Problem

**[0006]**

　　　(1) One aspect of the invention relates to a sensor chip including: a metal grating in which multiple long metal pieces extending in a first direction are arranged at a pitch smaller than the wavelength of an excitation light; a dielectric layer which covers the surface of the metal grating and forms a linear concavo-convex pattern extending in a second direction intersecting the first direction; and metal nanostructures which are placed on the surface of the dielectric layer.
　　　Since the metal nanostructures are arranged along the linear concavo-convex pattern, localized surface plasmon resonance (LSPR) is excited on the metal nanostructures based on a polarized light component parallel to the second direction. At the same time, the polarized light component parallel to the second direction is converted into a diffracted light by the action of the metal grating. The diffracted light causes propagating surface plasmon resonance (PSPR) on the surface of the metal grating. In this manner, the localized surface plasmon resonance is enhanced by the propagating surface plasmon resonance. The near-field light is enhanced on the surfaces of the metal nanostructures. A so-called hotspot is formed.
　　　(2) An intersecting angle at which the first direction and the second direction intersect each other may be set to 90°. According to this configuration, by one polarized light component, the localized surface plasmon resonance of the metal nanostructures is enhanced to the maximum and also the propagating surface plasmon resonance of the metal grating can be enhanced to the maximum. The surface plasmon resonance can be efficiently enhanced by an excitation light of a linearly polarized light.

(3) The metal nanostructures may be metal nanoparticles dispersed on the surface of the dielectric layer. The metal nanoparticles can be formed by relatively few operation steps based on simple deposition of a metal material or a heat treatment. The adoption of such metal nanoparticles can contribute to simplification of the production of the sensor chip.

(4) The concavo-convex pattern may include long dielectric pieces which are arranged on a standard plane parallel to the surface of the metal grating so as to extend in parallel with one another, wherein the arrangement pitch of the long dielectric pieces is smaller than the pitch of the metal grating. According to this arrangement pitch, the optical anisotropy of the assembly of the metal nanostructures can be reliably aligned with a desired direction.

(5) Another aspect of the invention relates to a sensor cartridge including: a housing which partitions a detection chamber; a substrate which has a surface in contact with a space in the detection chamber; a metal grating, which is placed on the surface of the substrate, and in which multiple long metal pieces extending in a first direction are arranged at a pitch smaller than the wavelength of an excitation light; a dielectric layer which covers the surface of the metal grating and forms a linear concavo-convex pattern extending in a second direction intersecting the first direction; and metal nanostructures which are placed on the surface of the dielectric layer. In this sensor cartridge, in the same manner as described above, the localized surface plasmon resonance is enhanced by the propagating surface plasmon resonance. The near-field light is enhanced on the surfaces of the metal nanostructures. A so-called hotspot is formed.

(6) Still another aspect of the invention relates to a detection apparatus including: a metal grating in which multiple long metal pieces extending in a first direction are arranged at a pitch smaller than the wavelength of an excitation light; a dielectric layer which covers the surface of the metal grating and forms a linear concavo-convex pattern extending in a second direction intersecting the first direction; metal nanostructures which are placed on the surface of the dielectric layer; a light source which emits a light to the metal nanostructures; and a light detector which detects a light emitted from the metal nanostructures according to the irradiation with the light. In this detection apparatus, in the same manner as described above, the localized surface plasmon resonance is enhanced by the propagating surface plasmon resonance. The near-field light is enhanced on the surfaces of the metal nanostructures. A so-called hotspot is formed.

Brief Description of Drawings

[Fig. 1] Fig. 1 is a partial perspective view schematically showing the structure of a sensor chip according to one embodiment.
[Fig. 2] Fig. 2 is a graph showing the dispersion relation of surface plasmons excited on a metal surface.
[Fig. 3] Fig. 3 is a graph showing the surface-enhanced Raman scattering (SERS) spectrum of a metal grating.
[Fig. 4] Fig. 4 is a graph showing the transmittance characteristic of a silver nanoparticle.
[Fig. 5] Fig. 5 is a graph showing the transmittance characteristic of a concavo-convex pattern of a dielectric film.
[Fig. 6] Fig. 6 is a graph showing the surface-enhanced Raman scattering (SERS) spectrum of a silver nanoparticle.
[Fig. 7] Fig. 7 is a graph showing the relationship between the height of a long metal piece and the reflectance of a light.
[Fig. 8] Fig. 8 is a graph showing the relationship between the thickness of a dielectric layer and the degree of electrical field enhancement.
[Fig. 9] Fig. 9 is a vertical sectional view of a silicon dioxide wafer schematically showing a resist film for forming a lattice pattern.
[Fig. 10] Fig. 10 is a vertical sectional view of a silicon dioxide wafer schematically showing a lattice pattern.
[Fig. 11] Fig. 11 is a vertical sectional view of a silicon dioxide wafer schematically showing a metal film on a lattice pattern.
[Fig. 12] Fig. 12 is a vertical sectional view of a silicon dioxide wafer schematically showing a dielectric layer on a metal film.
[Fig. 13] Fig. 13 is a partial perspective view of a silicon dioxide wafer schematically showing a resist film having a shape corresponding to a concavo-convex pattern.
[Fig. 14] Fig. 14 is a partial perspective view of a silicon dioxide wafer schematically showing a concavo-convex pattern.
[Fig. 15] Fig. 15 is a conceptual view schematically showing the structure of a target molecule detection apparatus.

Description of Embodiments

Hereinafter, one embodiment of the invention will be described with reference to the accompanying drawings. The embodiments described below do not unduly limit the contents of the invention described in the claims, and not all the configurations described in the embodiments are essential for the solving means of the invention.

(1) Structure of Sensor Chip

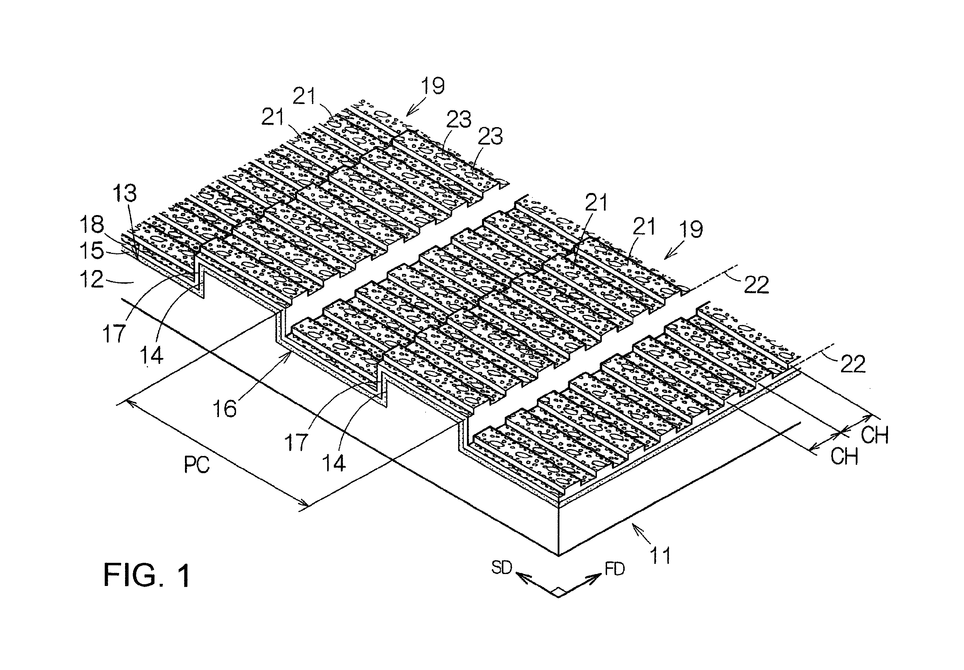

Fig. 1 schematically shows a sensor chip 11 according to one embodiment of the invention. This sensor chip 11 includes a substrate 12. The substrate 12 is formed from, for example, a dielectric material. As the dielectric material, for example, silicon dioxide ($SiO_2$), and other than this, a molding material such as a resin material can be used. The resin material may contain an acrylic resin such as a poly(methyl methacrylate) resin (PMMA resin).

On the surface of the substrate 12, a lattice pattern 13 is formed. The lattice pattern 13 has multiple long pieces 14 extending in a first direction FD. The long pieces 14 are arranged at an equal pitch in a second direction SD intersecting the first direction FD. Here, an intersecting angle at which the first direction FD and the second direction SD intersect each other in a virtual plane including the surface of the substrate 12 is set to 90°.

On the surface of the substrate 12, a metal film 15 is laminated. The lattice pattern 13 on the substrate 12 is covered with the metal film 15. The metal film 15 is formed from a metal. The metal film 15 can be formed from, for example, gold (Au). As the metal, other than this, silver (Ag), copper (Cu), aluminum (Al), platinum (Pt), nickel (Ni), palladium (Pd), tungsten (W), rhodium (Rh), or ruthenium (Ru) may be used. These may be used in the form of a simple substance, or may be used as a laminate of dissimilar metal layers, or may be used as an alloy. The metal film 15 can be continuously formed on, for example, the entire surface of the substrate 12. The metal film 15 can be formed to have a uniform thickness. The thickness of the metal film 15 can be set to, for example, about 20 nm.

The metal film 15 forms a metal grating 16 following the lattice pattern 13 on the substrate 12. The metal grating 16 has multiple long metal pieces 17 extending in the first direction FD. The long metal pieces 17 are arranged at a first pitch PC in the second direction SD. The first pitch PC is smaller than the wavelength of an excitation light. The long metal pieces 17 can be arranged at an equal interval. When forming such a metal grating 16, the substrate 12 can be formed from a metal material, and the metal film 15 and the substrate 12 can be formed as one body.

On the surface of the metal film 15, a dielectric layer 18 is laminated. The surface of the metal film 15 is covered with the dielectric layer 18. The dielectric layer 18 is formed from a dielectric body. The dielectric layer 18 can be formed from, for example, silicon dioxide ($SiO_2$). The dielectric layer 18 can be continuously formed on, for example, the entire surface of the metal film 15. The dielectric layer 18 can be formed to have a uniform thickness.

The dielectric layer 18 forms a linear concavo-convex pattern 19 extending in the second direction SD. The concavo-convex pattern 19 has multiple long dielectric pieces 21 extending in parallel with one another in the second direction SD. The long dielectric pieces 21 are arranged on a standard plane 22 parallel to the surface of the metal grating 16. The long dielectric pieces 21 are arranged at a second pitch CH in the first direction FD. The second pitch CH is smaller than the first pitch PC. The long dielectric pieces 21 can be arranged at an equal interval. Here, the concavo-convex pattern 19 is configured such that the long dielectric pieces 21 are arranged not only on the long metal pieces 17, but also between the long metal pieces 17 (so-called grooves).

On the surface of the dielectric layer 18, metal nanostructures 23 are arranged. The metal nanostructures 23 are composed of, for example, metal nanoparticles dispersed on the surface of the dielectric layer 18. The metal nanoparticles are formed to form a so-called island structure. The metal nanostructures 23 are formed from a metal. The metal nanostructures 23 can be formed from, for example, silver (Ag). As the metal, other than this, gold (Au), copper (Cu), aluminum (Al), platinum (Pt), nickel (Ni), palladium (Pd), tungsten (W), rhodium (Rh), or ruthenium (Ru) may be used. These may be used in the form of a simple substance, or may be used as a laminate of dissimilar metal layers, or may be used as an alloy. The metal nanostructures 23 are arranged on the long dielectric pieces 21 and also between the long dielectric pieces 21 (grooves) on the long metal pieces 17, and further are arranged on the long dielectric pieces 21 and also between the long dielectric pieces 21 (grooves) between the long metal pieces 17.

When the sensor chip 11 is irradiated with an excitation light, localized surface plasmon resonance (LSPR) is caused on the metal nanostructures 23 by the action of the excitation light. An enhanced electric field is formed between the adjacent metal nanostructures 23. A near-field light is generated on the surfaces of the metal nanostructures 23. The metal nanostructures 23 are arranged along the linear concavo-convex pattern 19, and therefore, the enhanced electric field can be enhanced based on a polarized light component parallel to the first direction FD. At the same time, the polarized light component parallel to the first direction FD is converted into a diffracted light by the action of the metal grating 16. The diffracted light causes propagating surface plasmon resonance (PSPR) on the surface of the metal grating 16. In this manner, the localized surface plasmon resonance is enhanced by the propagating surface plasmon resonance. The near-field light is enhanced on the surfaces of the metal nanostructures 23. A so-called hotspot is formed.

In the sensor chip 11, the long metal pieces 17 of the metal grating 16 extend in the first direction FD. The long dielectric pieces 21 of the concavo-convex pattern 19 extend in the second direction SD. The first direction FD and the second direction SD perpendicularly intersect each other. Therefore, by one polarized light component, the localized surface plasmon resonance of the metal nanostructures 23 is enhanced to the maximum, and also the propagating surface plasmon resonance of the metal grating 16 can be enhanced to the maximum. The surface plasmon resonance can be efficiently enhanced by an excitation light of a linearly polarized light.

The metal nanostructures 23 are composed of metal nanoparticles forming an island structure. The metal nanoparticles can be formed by relatively few operation steps based on simple deposition of a metal material or a heat treatment. The adoption of such metal nanoparticles can contribute to simplification of the production of the sensor chip 11. As the metal nanostructures 23, metal nanoprotrusions can be used in place of the metal nanoparticles. The metal nanoprotrusions can be regularly arranged on the surface of the dielectric layer 18. When forming such metal nanoprotrusions, for example, a photolithographic technique can be used.

In the sensor chip 11, the second pitch CH of the long dielectric pieces 21 is smaller than the first pitch PC of the long metal pieces 17. As a result, the optical anisotropy of the assembly of the metal nanostructures 23 can be reliably aligned with the second direction SD. For example, in the case where the metal nanobides 23 are arranged in a line on the long dielectric pieces 21, the second pitch CH can take a minimum value. At this time, the optical anisotropy of the assembly of the metal nanostructures 23 is increased to the maximum. Surface-enhanced Raman scattering (SERS) can be achieved by a specific polarized light. On the other hand, as the size of the second pitch CH approaches the first pitch PC, the optical anisotropy of the assembly of the metal nanostructures 23 is decreased.

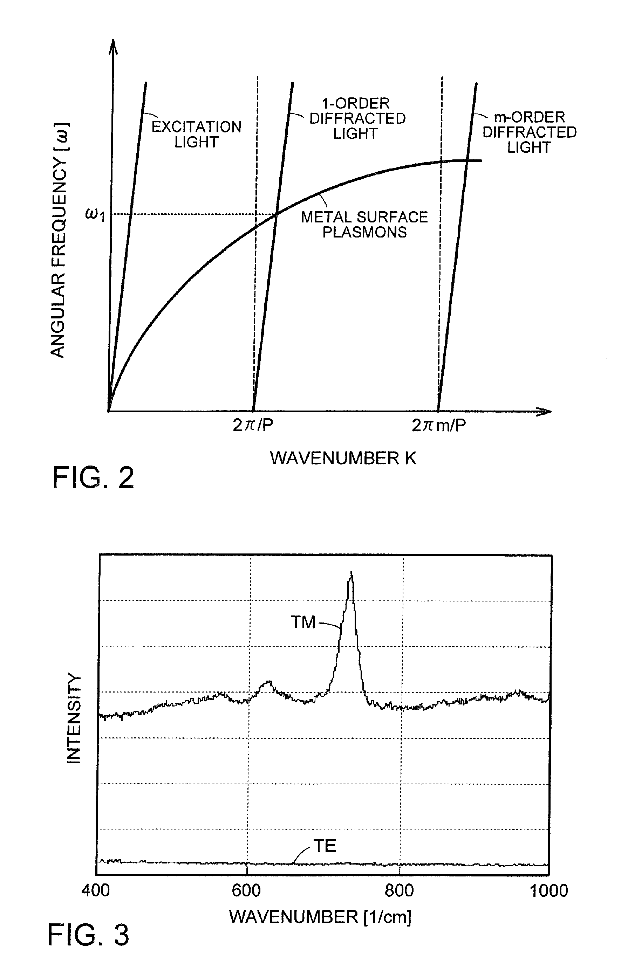

Fig. 2 shows the dispersion relation of surface plasmons excited on a metal surface. The dispersion relation of surface plasmons propagating along the interface between a metal having a dielectric function $\varepsilon(\omega)$ and a medium having a dielectric function $\varepsilon_m(\omega)$ is given by the following formula.

[Math. 1]

$$k_{spp} = \frac{\omega}{c} \sqrt{\frac{\varepsilon_m(\omega)\varepsilon(\omega)}{\varepsilon_m(\omega) + \varepsilon(\omega)}}$$

Here, $\omega$ represents an angular frequency, $k_{spp}$ represents the magnitude of the wave vector of a surface plasmon propagating along the interface between the metal and the medium, and c represents a light speed. On the other hand, the dispersion relation of a light incident at an incident angle $\theta$ and a light diffracted by the metal grating 16 is given by the following formulae.

[Math. 2]

$$k_0 = \frac{\omega}{c} \sqrt{\varepsilon_m} \sin\theta$$

[Math. 3]

$$k_n = \frac{\omega}{c} \sqrt{\varepsilon_m} \sin\theta + \frac{2\pi n}{P}$$

The magnitude $k_0$ of the wave vector of an incident light is always larger than $k_{spp}$, and the two dispersion curves do not have an intersection, and therefore, the incident light cannot directly excite surface plasmons. The magnitude $k_n$ of the wave vector of an n-order diffracted light has an intersection with the dispersion curve of $k_{spp}$, and therefore, the n-order diffracted light can excite surface plasmons. When the dispersion curves have an intersection, the first pitch PC of the metal grating 16 is always smaller than the wavelength $\lambda$ of the light. Therefore, the pitch of the metal grating 16 is always smaller than the wavelength of the incident light.

(2) Verification of Sensor Chip

The present inventors made an observation of the surface-enhanced Raman scattering (SERS) spectrum of the metal grating 16. When making the observation, the first pitch PC of the long metal pieces 17 was set to 500 nm. The formation of the dielectric layer 18 and the metal nanostructures 23 was omitted. Therefore, the metal grating 16 was directly exposed to an excitation light. As the excitation light, a light having a wavelength of 633 nm was used. As the light source, a He-Ne laser was used. The sensor chip was irradiated with a linearly polarized light beam. As the sample, an adenine molecule was used. As shown in Fig. 3, a signal peak specific to the adenine molecule, that is, at a wavenumber of 730 $cm^{-1}$ was observed. Here, a steep peak showing the adenine molecule was observed by a linearly polarized light in the direction TM perpendicular to the metal grating 16 (a direction parallel to the second direction SD). Strong Raman enhancement was confirmed. On the other hand, almost no peak was observed by a linearly polarized light in the direction TE parallel to the metal grating 16 (a direction parallel to the first direction FD). This is because diffraction occurred for the polarized light component perpendicular to the metal grating 16 to excite the surface plasmon resonance.

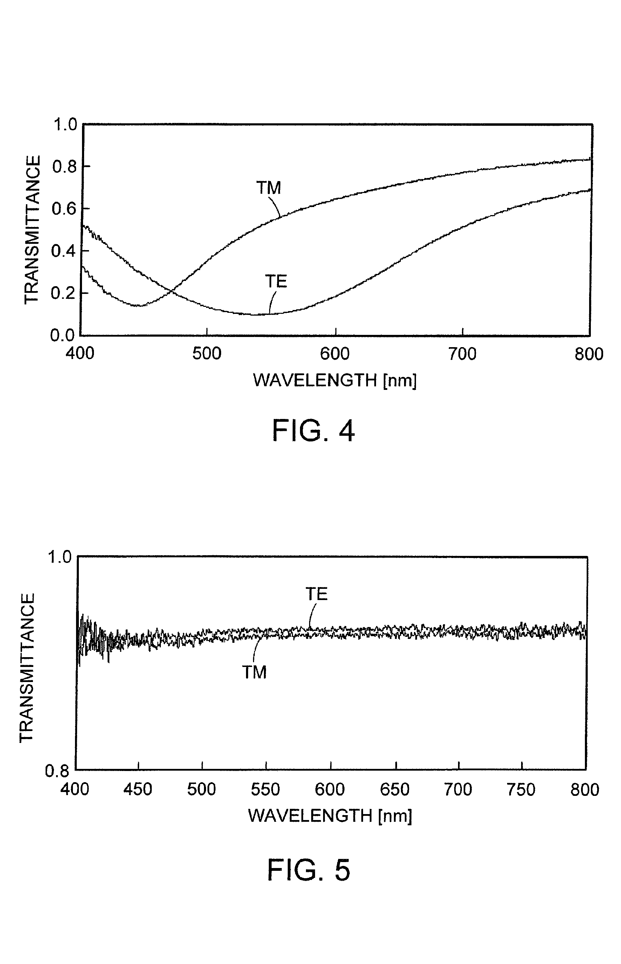

Next, the present inventors made an observation of the transmittance characteristic of metal nanoparticles forming an island structure. As the metal nanoparticles, silver nanoparticles were used. When making the observation, the linear concavo-convex pattern 19 was formed. The second pitch CH of the long dielectric pieces 21 was set to 140 nm. As shown in Fig. 4, a lower transmittance was observed with a linearly polarized light in the direction TE parallel to the linear concavo-convex pattern 19 (a direction parallel to the second direction SD) as compared with a linearly polarized light in the direction TM perpendicular to the linear concavo-convex pattern 19 (a direction parallel to the first direction FD). This is because the localized surface plasmon resonance was excited on the silver nanoparticles by the polarized light component in the second direction SD to cause light absorption. Therefore, it was confirmed that the enhanced electric field is more enhanced in the direction TE parallel to the linear concavo-convex pattern 19 than in the direction TM perpendicular to the linear concavo-convex pattern 19. As shown in Fig. 5, when only the long linear dielectric pieces 21 were formed at a second pitch CH of 140 nm and the formation of the silver nanoparticles was omitted, optical anisotropy with respect to the polarization directions TM and TE was hardly observed.

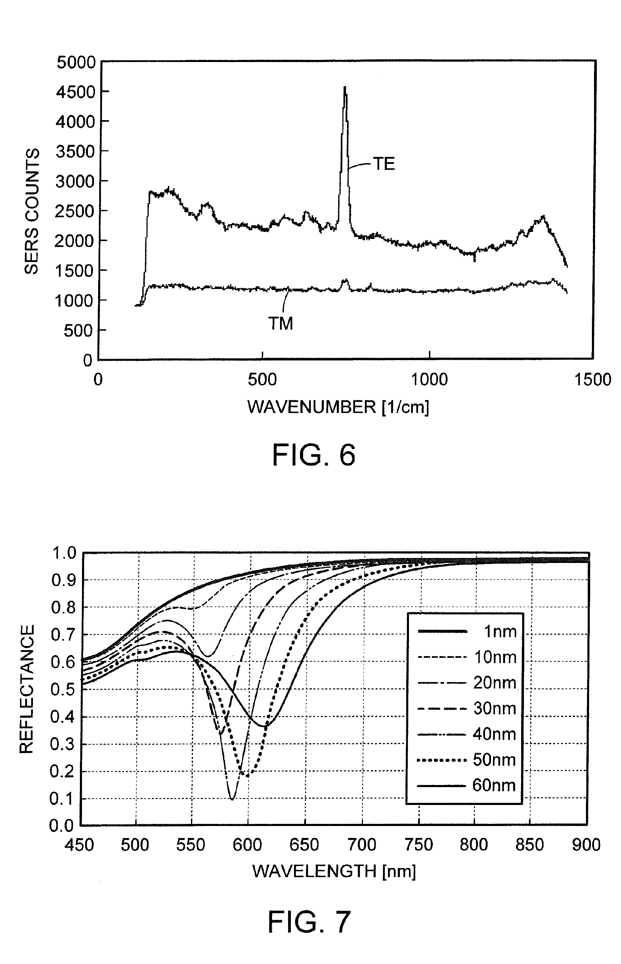

Next, the present inventors made an observation of the SERS spectrum of silver nanoparticles. When making the observation, the silver nanoparticles were formed on the linear concavo-convex pattern 19. The second pitch CH of the long dielectric pieces 21 was set to 140 nm. An excitation light having a wavelength of 633 nm was used. As the light source, a He-Ne laser was used. The sensor chip was irradiated with a linearly polarized light beam. As the sample, an adenine molecule was used. As shown in Fig. 6, a signal peak specific to the adenine molecule, that is, at a wavenumber of 730 $cm^{-1}$ was observed. Here, a steep peak showing the adenine molecule was observed by a linearly polarized light in the direction TM perpendicular to the concavo-convex pattern 19 (a direction parallel to the first direction FD). Strong Raman enhancement was confirmed. On the other hand, almost no peak was observed by a linearly polarized light in the direction TE parallel to the concavo-convex pattern 19 (a direction parallel to the second direction SD). In this manner, it was confirmed that the enhanced electric field is more enhanced in the direction TE parallel to the linear concavo-convex pattern 19 than in the direction TM perpendicular to the linear concavo-convex pattern 19.

Subsequently, the present inventors made an observation of the relationship between the height of the long metal pieces 17 and the light reflectance. When making the observation, the metal grating 16 was formed. The first pitch PC of the long metal pieces 17 was set to 500 nm. The formation of the dielectric layer 18 and the metal nanostructures 23 was omitted. Therefore, the metal grating 16 was directly exposed to an excitation light. A drop in the reflectance indicates the excitation of surface plasmon resonance. As shown in Fig. 7, when the height of the long metal pieces 17 was set to 30 to 60 nm, a sufficient drop in the reflectance was observed. It was confirmed that when the height of the long metal pieces 17 is set to 40 nm, the light is utilized to the maximum in the surface plasmon resonance. It was confirmed that the optimal wavelength for the surface plasmon resonance shifts according to the height of the long metal pieces 17.

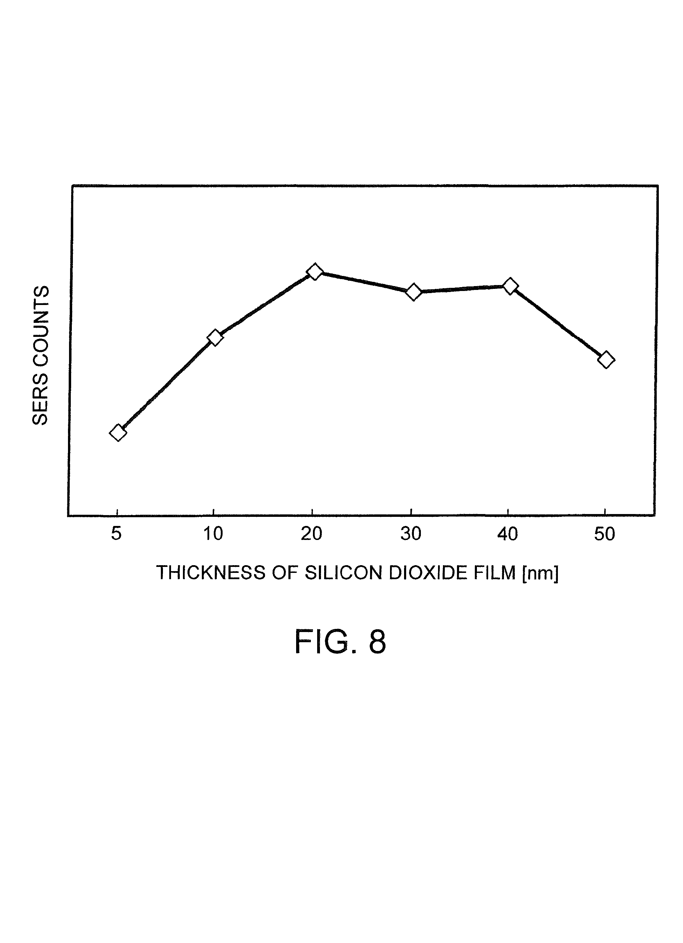

Subsequently, the present inventors made an observation of the relationship between the thickness of the dielectric layer 18 and the degree of electrical field enhancement. When making the observation, the dielectric layer 18, that is, a silicon oxide layer was formed on a flat silver film. On the surface of the silicon oxide layer, silver nanoparticles for forming an island structure were formed. The silver nanoparticles were exposed to an excitation light. As the excitation light, a light having a wavelength of 633 nm was used. As the light source, a He-Ne laser was used. The sensor chip was irradiated with a linearly polarized light beam. As the sample, an adenine molecule was used. As shown in Fig. 8, it was confirmed that when the thickness of the silicon oxide layer is set to about 20 to 40 nm, the intensity of the electric field is enhanced to the maximum.

(3) Production Method for Sensor Chip

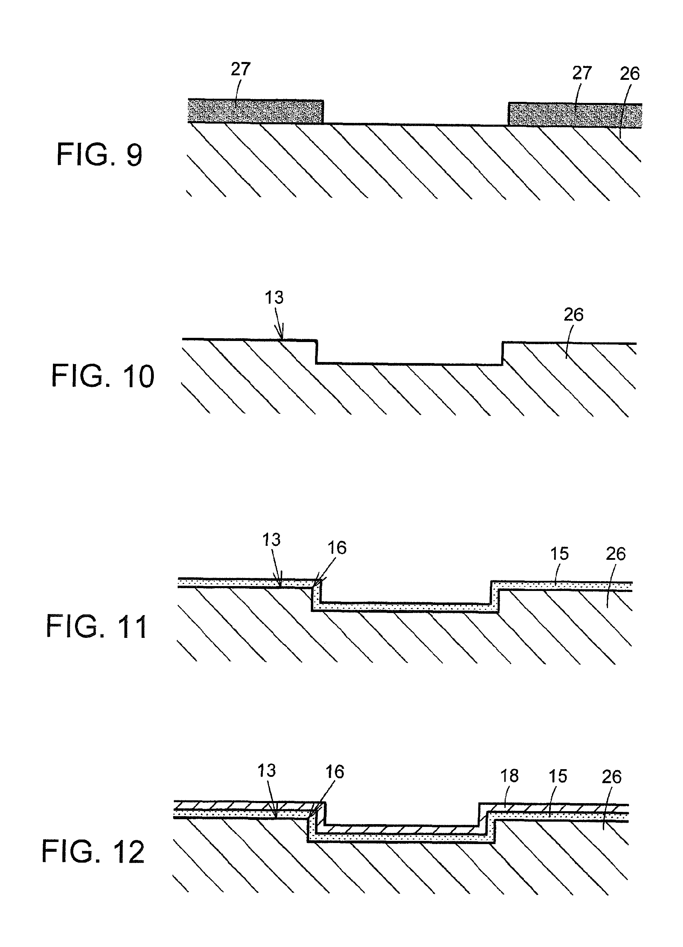

Next, a production method for the sensor chip 11 will be briefly described. As shown in Fig. 9, a pattern of the lattice pattern 13 is formed on the surface of a silicon dioxide wafer 26 with a resist film 27. When forming such a pattern, a photoresist is applied to the entire surface of the silicon dioxide wafer 26. The photoresist is subjected to laser interference exposure. After the exposure, the photoresist is developed. In this manner, the resist film 27 having a shape corresponding to the long pieces 14 is formed.

As shown in Fig. 10, subsequently, the surface of the silicon dioxide wafer 26 is subjected to an etching treatment. The resist film 27 functions as a mask. The surface of the silicon dioxide wafer 26 is etched around the resist film 27. As a result, on the surface of the silicon dioxide wafer 26, the lattice pattern 13 is formed. After forming the lattice pattern 13, the resist film 27 is removed.

As shown in Fig. 11, the metal film 15 is formed on the surface of the silicon dioxide wafer 26. For example, gold sputtering is performed. The metal film 15 is formed, for example, on the lattice pattern 13 to have a uniform thickness. As a result, the metal film 15 forms the metal grating 16 following the lattice pattern 13.

As shown in Fig. 12, the dielectric layer 18 is formed on the surface of the metal film 15. When forming the dielectric layer 18, for example, sputtering of silicon dioxide can be used. The dielectric layer 18 is formed to have a uniform thickness. As a result, the dielectric layer 18 forms a lattice pattern following the metal grating 16.

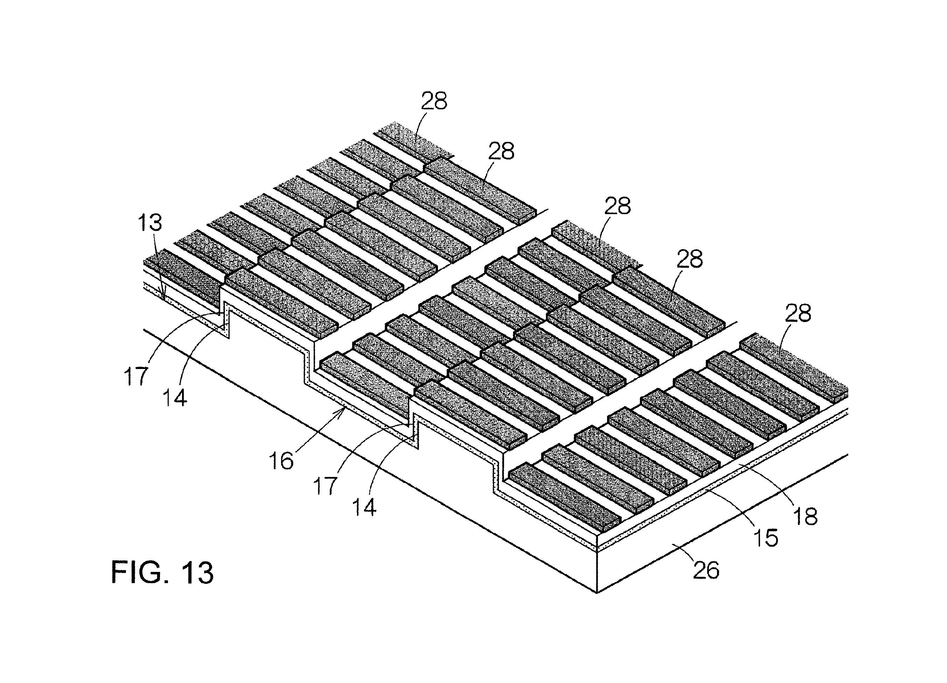

As shown in Fig. 13, a stripe pattern of the concavo-convex pattern 19 is formed on the surface of the dielectric layer 18 with a resist film 28. When forming such a resist film 28, a photoresist is applied to the entire surface of the dielectric layer 18. The photoresist is subjected to laser interference exposure. After the exposure, the photoresist is developed. In this manner, the resist film 28 having a shape corresponding to the long dielectric pieces 21 is formed.

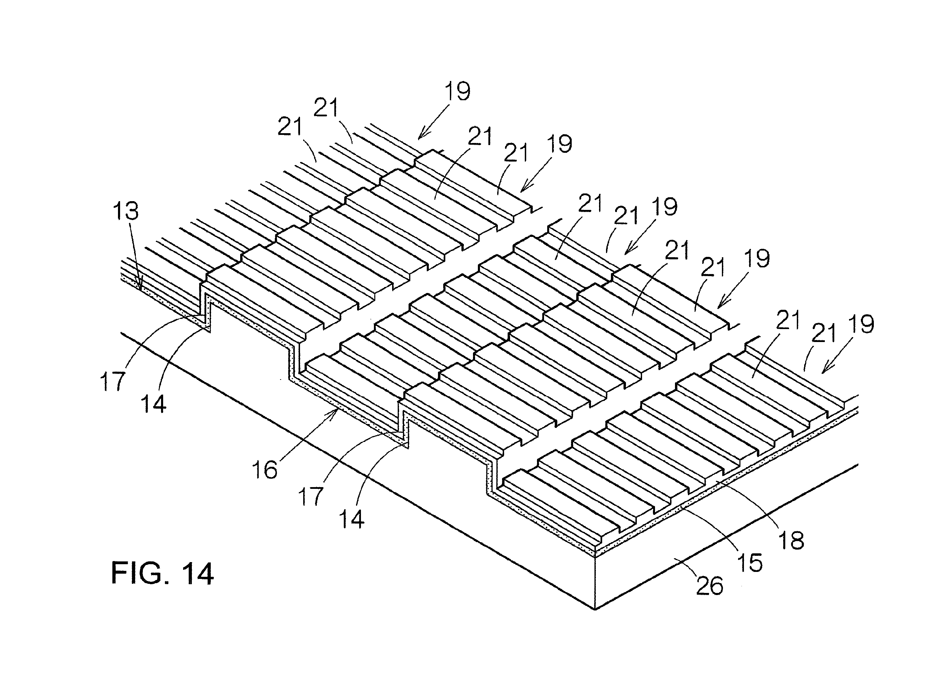

As shown in Fig. 14, the dielectric layer 18 is subjected to an etching treatment. The resist film 28 functions as a mask. The surface of the dielectric layer 18 is etched around the resist film 28. As a result, the concavo-convex pattern 19 is formed on the surface of the dielectric layer 18. After forming the concavo-convex pattern 19, the resist film 28 is removed. Thereafter, silver nanoparticles for forming an island structure are formed on the surface of the dielectric layer 18. Vacuum thermal vapor deposition of silver is performed. After forming the silver nanoparticles, each sensor chip 11 is cut out of the silicon dioxide wafer 26.

(4) Detection Apparatus According to One Embodiment

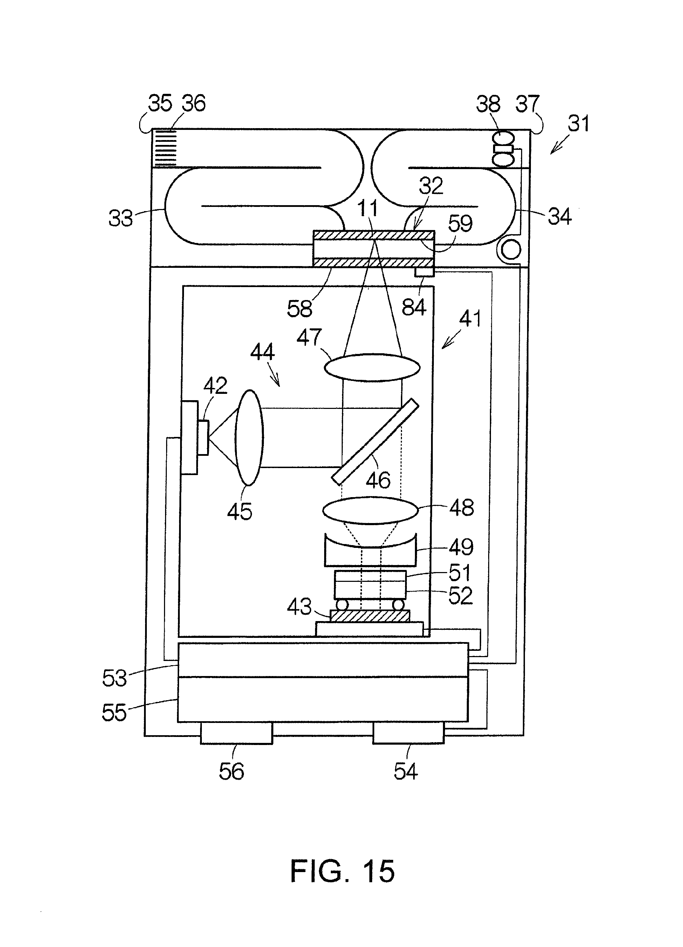

Fig. 15 schematically shows a target molecule detection apparatus (detection apparatus) 31 according to one embodiment. The target molecule detection apparatus 31 includes a sensor cartridge 32. To the sensor cartridge 32, an introduction channel 33 and a discharge channel 34 are separately connected. A gas is introduced into the sensor cartridge 32 through the introduction channel 33. The gas is discharged from the sensor cartridge 32 through the discharge channel 34. A filter 36 is attached to a channel inlet 35 of the introduction channel 33. The filter 36 can remove, for example, dust or steam in the gas. A suction unit 38 is attached to a channel outlet 37 of the discharge channel 34. The suction unit 38 is composed of a ventilation fan. According to the operation of the ventilation fan, the gas is circulated through the introduction channel 33, the sensor cartridge 32, and the discharge channel 34 in this order. In such a gas circulation channel, a shutter (not shown) is placed on both upstream and downstream of the sensor cartridge 32. The gas can be confined in the sensor cartridge 32 according to opening and closing of the shutters. The sensor cartridge 32 can be detachably attached to, for example, the introduction channel 33 and the discharge channel 34.

The target molecule detection apparatus 31 includes a Raman scattered light detection unit 41. The Raman scattered light detection unit 41 irradiates the sensor cartridge 32 with an excitation light and detects a Raman scattered light. In the Raman scattered light detection unit 41, a light source 42 is incorporated. As the light source 42, a laser light source can be used. The laser light source can emit a linearly polarized laser light at a specific wavelength (single wavelength).

The Raman scattered light detection unit 41 includes a light-receiving element 43. The light-receiving element 43 can detect, for example, the intensity of a light. The light-receiving element 43 can output a detected current according to the intensity of a light. Therefore, the intensity of a light can be determined according to the magnitude of a current output from the light-receiving element 43.

An optical system 44 is constructed between the light source 42 and the sensor cartridge 32 and between the sensor cartridge 32 and the light-receiving element 43. The optical system 44 forms a light channel between the light source 42 and the sensor cartridge 32, and at the same time, a light from the light source 42 is guided to the sensor cartridge 32 by the action of the sensor cartridge 32 and the light-receiving element 43. A reflected light from the sensor cartridge 32 is guided to the light-receiving element 43 by the action of the optical system 44.

The optical system 44 includes a collimator lens 45, a dichroic mirror 46, an objective lens 47, a condenser lens 48, a concave lens 49, an optical filter 51, and a spectroscope 52. The dichroic mirror 46 is placed, for example, between the sensor cartridge 32 and the light-receiving element 43. The objective lens 47 is placed between the dichroic mirror 46 and the sensor cartridge 32. The objective lens 47 collects a parallel light supplied from the dichroic mirror 46 and guides the light to the sensor cartridge 32. A reflected light from the sensor cartridge 32 is converted into a parallel light by the objective lens 47 and is transmitted through the dichroic mirror 46. Between the dichroic mirror 46 and the light-receiving element 43, the condenser lens 48, the concave lens 49, the optical filter 51, and the spectroscope 52 are placed. The optical axes of the objective lens 47, the condenser lens 48, and the concave lens 49 are aligned to be coaxial with one another. The light collected by the condenser lens 48 is converted into a parallel light again by the concave lens 49. The optical filter 51 removes a Rayleigh scattered light. A Raman scattered light passes through the optical filter 51. The spectroscope 52 selectively transmits, for example, a light having a specific wavelength. In this manner, in the light-receiving element 43, the intensity of a light is detected at each specific wavelength. In the spectroscope 52, for example, an etalon can be used.

The optical axis of the light source 42 perpendicularly intersects the optical axes of the objective lens 47 and the condenser lens 48. The surface of the dichroic mirror 46 intersects these optical axes at an angle of 45°. The collimator lens 45 is placed between the dichroic mirror 46 and the light source 42. In this manner, the collimator lens 45 is made to face the light source 42. The optical axis of the collimator lens 45 is aligned to be coaxial with the optical axis of the light source 42.

The target molecule detection apparatus 31 includes a control unit 53. To the control unit 53, the light source 42, the spectroscope 52, the light-receiving element 43, the suction unit 38, and other devices are connected. The control unit 53 controls the operation of the light source 42, the spectroscope 52, and the suction unit 38, and also processes output signals from the light-receiving element 43. To the control unit 53, a signal connector 54 is connected. The control unit 53 can exchange signals with the outside through the signal connector 54.

The target molecule detection apparatus 31 includes a power supply unit 55. The power supply unit 55 is connected to the control unit 53. The power supply unit 55 supplies an operating power to the control unit 53. The control unit 53 can operate by receiving power supply from the power supply unit 55. As the power supply unit 55, for example, a primary battery or a secondary battery can be used. The secondary battery can include, for example, a rechargeable power supply connector 56.

The control unit 53 includes a signal processing control section. The signal processing control section can be constituted by, for example, a central processing unit (CPU), and memory circuits such as a RAM (random access memory) and a ROM (read only memory). In the ROM, for example, a processing program or spectral data can be stored. With the spectral data, the spectrum of the Raman scattered light of the target molecule is determined. The CPU executes the processing program while temporarily incorporating the processing program or the spectral data in the RAM. The CPU collates the spectrum of a light to be determined by the action of the spectroscope and the light-receiving element with the spectral data.

The sensor cartridge 32 includes a housing 58. The housing 58 partitions a detection chamber 59. The detection chamber 59 is connected to the introduction channel 33 at one end and to the discharge channel 34 at the other end. In the housing 58, the sensor chip 11 is incorporated. The surface of the substrate 12 is in contact with a space in the detection chamber 59. A light emitted from the light source 42 is converted into a parallel light by the collimator lens 45. A linearly polarized light is reflected by the dichroic mirror 46. The reflected light is collected by the objective lens 47 and the sensor cartridge 32 is irradiated therewith. At this time, the light can be made incident in the perpendicular direction perpendicular to the surface of the sensor chip 11. So-called perpendicular incidence can be established. The polarization plane of the light is aligned parallel to the linear concavo-convex pattern 19 (second direction SD). By the action of the irradiation light, localized surface plasmon resonance is caused on the metal nanostructures 23. The near-field light is enhanced between the metal nanostructures 23. A so-called hotspot is formed.

At this time, when a target molecule adheres to the metal nanostructure 23 in the hotspot, a Rayleigh scattered light and a Raman scattered light are generated from the target molecule. So-called surface-enhanced Raman scattering is realized. As a result, a light is emitted to the objective lens 47 at a spectrum according to the type of the target molecule.

The light emitted from the sensor cartridge 32 in this manner is converted into a parallel light by the objective lens 47, and passes through the dichroic mirror 46, the condenser lens 48, the concave lens 49, and the optical filter 51. A Raman scattered light is incident on the spectroscope 52. The spectroscope 52 disperses the Raman scattered light. The light-receiving element 43 detects the intensity of the light at each specific wavelength in this manner. The spectrum of the light is collated with the spectral data. The target molecule can be detected according to the spectrum of the light. In this manner, the target molecule detection apparatus 31 can detect a target substance, for example, an adenovirus, a rhinovirus, an HIV virus, or an influenza virus based on surface-enhanced Raman scattering.

While the embodiments have been described in detail in the above description, it could be easily understood by those skilled in the art that various modifications can be made without departing in substance from the novel matter and effects of the invention. Therefore, such modifications all fall within the scope of the invention. For example, in the specification or the drawings, a term which is described at least once together with a different term having a broader meaning or the same meaning can be replaced with the different term in any parts of the specification or the drawings. Further, the structures and operations of the sensor chip 11, the target substance detection apparatus 31, and so on are not limited to those described in the embodiments, and various modifications can be made.

Reference Sings List

11 sensor chip, 12 substrate, 16 metal grating, 17 long metal piece, 18 dielectric layer, 19 concavo-convex pattern, 21 long dielectric piece, 22 standard surface (standard plane), 23 metal nanostructure, 31 detection apparatus (target substance detection apparatus), 32 sensor cartridge, 59 detection chamber, FD first direction, SD second direction, PC pitch (first pitch)

**Claims**

1. A sensor chip, comprising:

   a metal grating in which multiple long metal pieces extending in a first direction are arranged at a pitch smaller than the wavelength of an excitation light;
   a dielectric layer which covers the surface of the metal grating and forms a linear concavo-convex pattern extending in a second direction intersecting the first direction; and
   metal nanostructures which are placed on the surface of the dielectric layer.

2. The sensor chip according to claim 1, wherein an intersecting angle at which the first direction and the second direction intersect each other is set to 90°.

3. The sensor chip according to claim 1 or 2, wherein the metal nanostructures are metal nanoparticles dispersed on the surface of the dielectric layer.

4. The sensor chip according to any one of claims 1 to 3, wherein the concavo-convex pattern includes long dielectric pieces which are arranged on a standard plane parallel to the surface of the metal grating so as to extend in parallel with one another, and the arrangement pitch of the long dielectric pieces is smaller than the pitch of the metal grating.

5. A sensor cartridge, comprising:

   a housing which partitions a detection chamber;
   a substrate which has a surface in contact with a space in the detection chamber;
   a metal grating, which is placed on the surface of the substrate, and in which multiple long metal pieces extending in a first direction are arranged at a pitch smaller than the wavelength of an excitation light;
   a dielectric layer which covers the surface of the metal grating and forms a linear concavo-convex pattern extending in a second direction intersecting the first direction; and
   metal nanostructures which are placed on the surface of the dielectric layer.

6. A detection apparatus, comprising:

   a metal grating in which multiple long metal pieces extending in a first direction are arranged at a pitch smaller than the wavelength of an excitation light;
   a dielectric layer which covers the surface of the metal grating and forms a linear concavo-convex pattern extending in a second direction intersecting the first direction;
   metal nanostructures which are placed on the surface of the dielectric layer;
   a light source which emits a light to the metal nanostructures; and
   a light detector which detects a light emitted from the metal nanostructures according to the irradiation with the light.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

EP 2 848 920 A1

FIG. 14

FIG. 15

| | **INTERNATIONAL SEARCH REPORT** | International application No. |
|---|---|---|
| | | PCT/JP2013/002922 |

**A. CLASSIFICATION OF SUBJECT MATTER**
*G01N21/65*(2006.01)i

According to International Patent Classification (IPC) or to both national classification and IPC

**B. FIELDS SEARCHED**

Minimum documentation searched (classification system followed by classification symbols)
G01N21/00, 21/01, 21/17-21/74, B82B1/00, 3/00

Documentation searched other than minimum documentation to the extent that such documents are included in the fields searched

| Jitsuyo Shinan Koho | 1922-1996 | Jitsuyo Shinan Toroku Koho | 1996-2013 |
|---|---|---|---|
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2011-141265 A  (Seiko Epson Corp.), 21 July 2011 (21.07.2011), paragraphs [0094] to [0097]; fig. 12(b) & US 2011/0114859 A1    & US 2011/0116088 A1 & EP 2325634 A2         & EP 2325635 A2 & CN 102072878 A        & CN 102072879 A & KR 10-2011-0055466 A  & KR 10-2011-0055467 A & TW 201140033 A        & TW 201140034 A & CN 103018210 A        & CN 103018211 A | 1-6 |
| A | JP 2012-63156 A  (Seiko Epson Corp.), 29 March 2012 (29.03.2012), paragraphs [0119] to [0123]; fig. 17 & US 2012/0062882 A1    & CN 102401794 A | 1-6 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 June, 2013 (14.06.13) | 25 June, 2013 (25.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 848 920 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011128135 A

- JP 2011141265 A